# EUROPEAN PATENT APPLICATION

(11) **EP 1 905 742 A1**
(43) Date of publication of application: **02.04.2008**
(21) Application number: 06757209.9
(22) Date of filing: 09.06.2006
(51) Int. Cl.: C01G 33/00, C01B 21/06, H01G 9/00, H01G 9/052, C04B 35/00

(54) **MICROPOWDER OF Nb COMPOUND AND PROCESS FOR PRODUCTION THEREOF**

(30) Priority: 10.06.2005 JP 2005170966
(71) Applicant: ROHM CO., LTD., Kyoto-shi, Kyoto 615-8585 (JP)
(72) Inventor: KURIYAMA, Chojiro, c/o Rohm Co., Ltd., Kyoto-shi, Kyoto 6158585 (JP)
(74) Representative: Setna, Rohan P.
(86) International application number: PCT/JP2006/311586
(87) International publication number: WO 2006/132346

(57) **Abstract**

The powder of an Nb compound has a composition represented by NbxOy, NbxNz or NbxOyNz. The powder of the Nb compound has an electric conductivity which is not less than 1/10 of that of Nb. A porous sintered body used for manufacturing a solid electrolytic capacitor is formed using the powder of the Nb compound. The solid electrolytic capacitor achieves both of a reduction in size and an increase in capacitance.

## Description

### TECHNICAL FIELD

The present invention relates to powder of an Nb compound and a method for manufacturing the powder. The present invention also relates to a porous sintered body made of powder of an Nb compound and to a solid electrolytic capacitor using such a porous sintered body.

### BACKGROUND ART

Fig. 25 shows a conventional solid electrolytic capacitor disclosed in the Patent Document 1 described below. The solid electrolytic capacitor X shown in the figure includes a porous sintered body 91. An anode wire 91a projects from the porous sintered body 91. The anode wire 91a is electrically connected to an external anode terminal 95A. The porous sintered body 91 is covered by a dielectric layer 92. On the dielectric layer 92, two solid electrolytic layers 93a and 93b are laminated. The solid electrolytic layers 93a and 93b are electrically connected to an external cathode terminal 95B via a cathode conductor layer 94 made up of a graphite layer and a silver paste layer. A resin package 96 is provided to seal the porous sintered body 91 and so on. In the solid electrolytic capacitor X, the porous sintered body 91 is made of Ta or Nb so that the size is reduced and the capacitance is increased.

There is an increasing demand for a reduction in size and an increase in capacitance of a solid electrolytic capacitor. However, to reduce the size and increase the capacitance of the conventional solid electrolytic capacitor X has the following problems.

To increase the capacitance of the solid electrolytic capacitor without increasing the size, the CV value needs to be increased. The CV value is a product of the capacitance C per unit mass and the formation voltage V, and generally expressed using µFV/g as the unit. The CV value largely depends on the surface area per unit mass of the powder of Ta or Nb, which is the material of the porous sintered body 91. By making the particles of the powder smaller, the surface area per unit mass can be increased, whereby the CV value can be increased. However, as long as Ta or Nb is used as the material, there is a limit on the particle size reduction because of the characteristics inherent in the material.

Moreover, when the particle size of the powder as the material of the porous sintered body 91 is reduced, the sintering temperature in forming the porous sintered body 91 drops. When the sintering temperature is too low, the bonding strength between the porous sintered body 91 and the anode wire 91a is insufficient. In this case, the anode wire 91a may drop in manufacturing the solid electrolytic capacitor X or proper conduction may not be established in using the solid electrolytic capacitor X. Further, when the sintering temperature is low, the temperature necessary for evaporating or sublimating impurities such as carbon absorbed in the porous sintered body 91 may not be reached. In such a case, the dielectric layer 92 becomes defective, so that the reliability of the solid electrolytic capacitor X is considerably deteriorated.

Further, to achieve both of a reduction in size and an increase in capacitance, it is necessary to make a small porous sintered body 91 using powder having a small particle size. However, to press such powder is relatively difficult. Further, the smaller the porous sintered body 91 is, the more difficult the bonding with the anode wire 91a is.

In this way, the solid electrolytic capacitor X still has room for improvement with respect to a reduction in size and an increase in capacitance.

Patent Document 1: JP-A-2002-289479

### DISCLOSURE OF THE INVENTION

An object of the present invention, which is proposed under the above-described circumstances, is to provide powder of an Nb compound which achieves both of a reduction in size and an increase in capacitance of a solid electrolytic capacitor.

To solve the above-described problems, the present invention takes the following technical means.

According to a first aspect of the present invention, there is provided powder of an Nb compound having a composition represented by NbxOy and an electric conductivity which is not less than 1/10 of the electric conductivity of Nb.

Preferably, in the composition, y≤1.1 for x=1.

Preferably, the concentration of O is not less than 8000 ppm. In the present invention, the ratio of Nb and O or N constituting the Nb compound is defined. All of the above-described composition, the above-described concentration of O, and the concentration of N which will be described later are physical quantities for defining the above-described ratio. As the concentration of O in the Nb compound, an average concentration from the surface of the particles of the Nb compound to the center thereof is employed. This holds true for the following description.

Preferably, the concentration of O is not less than 14000 ppm.

Preferably, the concentration of O is not less than 24000 ppm.

Preferably, the concentration of O is not less than 48000 ppm.

Preferably, the concentration of O is not less than 140000 ppm.

According to a second aspect of the present invention, there is provided powder of an Nb compound having a composition represented by NbxNz and an electric conductivity which is not less than 1/10 of the electric conductivity of Nb.

Preferably, in the composition, z≤1.1 for x=1.

Preferably, the concentration of N is not less than 8000 ppm.

Preferably, the concentration of N is not less than 14000 ppm.

Preferably, the concentration of N is not less than 24000 ppm.

Preferably, the concentration of N is not less than 48000 ppm.

Preferably, the concentration of N is not less than 140000 ppm.

According to a third aspect of the present invention, there is provided powder of an Nb compound having a composition represented by NbxOyNz and an electric conductivity which is not less than 1/10 of the electric conductivity of Nb.

Preferably, in the composition, y+z≤1.1 for x=1.

Preferably, the total of the concentration of O and the concentration of N is not less than 8000 ppm.

Preferably, the total of the concentration of O and the concentration of N is not less than 14000 ppm.

Preferably, the total of the concentration of O and the concentration of N is not less than 24000 ppm.

Preferably, the total of concentration of O and the concentration of N is not less than 48000 ppm.

Preferably, the total of concentration of O and the concentration of N is not less than 140000 ppm.

In the case of the above-described Nb compound, the sintering temperature does not become too low even when the particle size of the powder is reduced. Thus, by using the powder of the Nb compound as the material of the porous sintered body of a solid electrolytic capacitor, the CV value is enhanced, and both of a reduction in size and an increase in capacitance are achieved. Further, when the powder of an Nb compound has an electric conductivity which is not less than 1/10 of that of pure Nb, the Nb compound is not an insulator or a semiconductor but belongs to a conductor. When the powder of this Nb compound is used as the material of the porous sintered body of a solid electrolytic capacitor, the ESR is reduced, and the electrical loss is not unduly increased. Thus, the powder is suitable for the material of the porous sintered body. It is to be noted that the above-described composition of the Nb compound ensures the electric conductivity which is not less than 1/10 of that of Nb.

Preferably, the powder has a surface area per unit weight of not less than 2m²/g.

Preferably, the powder has a surface area per unit weight of not less than 4m²/g.

Preferably, the powder has a surface area per unit weight of not less than 8m²/g.

Preferably, the powder has a surface area per unit weight of not less than 10m²/g.

According to a fourth aspect of the present invention, there is provided a method for manufacturing powder of an Nb compound. The method comprises the steps of preparing powder of Nb, and doping O into the powder of Nb. The doping of O is performed by a gas phase process to obtain powder of an Nb compound having a composition represented by NbxOy where y≤1.1 for x=1.

Preferably, the O doping step is so performed that the concentration of O in the powder of an Nb compound be not less than 8000 ppm.

Preferably, the O doping step is so performed that the concentration of O in the powder of the Nb compound be not less than 14000 ppm.

Preferably, the O doping step is so performed that the concentration of O in the powder of the Nb compound be not less than 24000 ppm.

Preferably, the O doping step is so performed that the concentration of O in the powder of the Nb compound be not less than 48000 ppm.

Preferably, the O doping step is so performed that concentration of O in the powder of the Nb compound be not less than 140000 ppm.

According to a fifth aspect of the present invention, there is provided a method for manufacturing powder of an Nb compound. The method comprises the steps of preparing powder of Nb, and doping N into the powder of Nb. The doping of N is performed by a gas phase process to obtain powder of an Nb compound having a composition represented by NbxNz where z≤1.1 for x=1.

Preferably, the N doping step is so performed that the concentration of N in the powder of the Nb compound be not less than 8000 ppm.

Preferably, the N doping step is so performed that the concentration of N in the powder of the Nb compound be not less than 14000 ppm.

Preferably, the N doping step is so performed that the concentration of N in the powder of the Nb compound be not less than 24000 ppm.

Preferably, the N doping step is so performed that the concentration of N in the powder of the Nb compound be not less than 48000 ppm.

Preferably, the N doping step is so performed that the concentration of N in the powder of the Nb compound be not less than 140000 ppm.

According to a sixth aspect of the present invention, there is provided a method for manufacturing powder of an Nb compound. The method comprises the steps of preparing powder of Nb, and doping O and N into the powder of Nb. The doping of O and N is performed by a gas phase process to obtain powder of an Nb compound having a composition represented by NbxOyNz where y+z≦1.1 for x=1.

Preferably, the step of doping O and N is so performed that the total of the concentration of O and the concentration of N in the powder of the Nb compound be not less than 8000 ppm.

Preferably, the step of doping O and N is so performed that the total of the concentration of O and the concentration of N in the powder of the Nb compound be not less than 14000 ppm.

Preferably, the step of doping O and N is so performed that the total of the concentration of O and the concentration of N in the powder of the Nb compound be not less than 24000 ppm.

Preferably, the step of doping O and N is so performed that the total of the concentration of O and the concentration of N in the powder of the Nb compound be not less than 48000 ppm.

Preferably, the step of doping O and N is so performed that the total of the concentration of O and the concentration of N in the powder of the Nb compound be not less than 140000 ppm.

Preferably, in the step of preparing powder of Nb, the powder is formed to have a surface area per weight described in the preferred embodiments of powder of an Nb compound according to a first through a third aspect of the present invention.

With these methods, the powder of an Nb compound according to the first through the third aspect of the present invention is manufactured properly.

Preferably, the doping step is performed at a temperature lower than both of the temperature at which Nb₂O₅ forms on a surface of the powder of Nb and the temperature at which sintering of the powder of Nb occurs and at an oxygen concentration at which an oxide film of Nb₂O₅ does not form on the surface of the powder of Nb. It is preferable that the temperature in the doping step is as high as possible within the range in which sintering does not occur. Further, for achieving homogenization, it is preferable that the diffusion is performed in the state in which the difference of concentration of O or N between the surface and the inside of the powder is small. For this purpose, it is preferable that as a long time as possible is taken for the diffusion.

Preferably, in the doping step, the concentration of doping gas and the ambient temperature are gradually increased. With this arrangement, O atoms or N atoms are properly diffused by gas phase diffusion.

Preferably, the method further comprises the step of forming, on a surface of the powder of Nb, an oxide film made of an oxide of Nb having a composition represented by NbxOy where y<2.5 for x=1 by gas phase oxidation. The step is performed after the step of preparing powder of Nb and before the doping step. In the doping step, O is thermally diffused from the oxide film into the powder at a temperature at which sintering does not occur. With this arrangement, by adjusting the thickness of the oxide film to be formed, the concentration of O is properly controlled.

Preferably, in the oxide of Nb, y≦2.0 for x=1.

Preferably, in the oxide of Nb, y≦1.5 for x=1.

Preferably, in the oxide of Nb, y≤1.0 for x=1.

Preferably, the step of preparing powder of Nb is performed by vapor phase growth. This arrangement is suitable for forming powder of Nb having a small particle size. Conventionally, to achieve uniform doping into the interior of the powder of Nb, for example, diffusion at a relatively high temperature for a relatively long time has been necessary. However, by employing the vapor phase growth, the particles of Nb have a cylindrical shape having a diameter of about 0.1 to 0.8 µm. Thus, the distance from the surface to the inside of the particle is relatively short. Since the diffusion time is proportional to the square of the distance, diffusion is completed in a shorter time than in a conventional technique. Thus, the manufacturing efficiency is enhanced. Further, homogenous Nb particles are obtained.

Preferably, the powder of Nb is isolated from air from the start of the step of preparing the powder of Nb till the completion of the doping step. With this arrangement, the powder of Nb is not unduly oxidized.

Preferably, the method further comprises a reduction step using hydrogen for adjusting the composition of the compound of Nb. The reduction step is performed after the doping step. With this arrangement, the concentration of O can be lowered when it exceeds a predetermined value.

According to a seventh aspect of the present invention, there is provided a porous sintered body for manufacturing a solid electrolytic capacitor. The porous sintered body comprises powder of an Nb compound provided according to any of the first through the third aspect of the present invention.

According to an eighth aspect of the present invention, there is provided a solid electrolytic capacitor comprising a porous sintered body of a valve metal, a dielectric layer covering at least part of the porous sintered body, and a solid electrolytic layer covering at least part of the dielectric layer. The porous sintered body is provided according to the seventh aspect of the present invention.

This arrangement ensures the enhancement of a CV value of the solid electrolytic capacitor and is suitable for a reduction in size and an increase in capacitance.

Preferably, the solid electrolytic capacitor has a CV value of not less than 100000 µF/g.

Preferably, the solid electrolytic capacitor has a CV value of not less than 200000 µF/g.

Preferably, the solid electrolytic capacitor has a CV value of not less than 300000 µF/g.

Preferably, the solid electrolytic capacitor has a CV value of not less than 400000 µF/g.

Preferably, the solid electrolytic capacitor has a CV value of not less than 500000 µF/g.

Preferably, the solid electrolytic capacitor has a CV value of not less than 700000 µF/g.

Preferably, the solid electrolytic capacitor has a CV value of not less than 800000 µF/g.

Preferably, the solid electrolytic capacitor has a CV value of not less than 1000000 µF/g.

According to a ninth aspect of the present invention, there is provided a method for manufacturing a solid electrolytic capacitor comprising a porous sintered body of a valve metal, a dielectric layer covering at least part of the porous sintered body, and a solid electrolytic layer covering at least part of the dielectric layer. The manufacturing method comprises the steps of preparing a compacted powder body using powder of Nb, doping O into the compacted powder body by a gas phase process to change the powder of Nb forming the compacted powder body into powder of an Nb compound having a composition represented by NbxOy where y≤1.1 for x=1, and sintering the compacted powder body after the doping step.

Preferably, the step of obtaining powder of an Nb compound is so performed that the concentration of O in the powder of the Nb compound be not less than 8000 ppm.

Preferably, the step of obtaining powder of an Nb compound is so performed that the concentration of O in the powder of the Nb compound be not less than 14000 ppm.

Preferably, the step of obtaining powder of an Nb compound is so performed that the concentration of O in the powder of the Nb compound be not less than 24000 ppm.

Preferably, the step of obtaining powder of an Nb compound is so performed that the concentration of O in the powder of the Nb compound be not less than 48000 ppm.

Preferably, the step of obtaining powder of an Nb compound is so performed that the concentration of O in the powder of the Nb compound be not less than 140000 ppm.

According to a tenth aspect of the present invention, there is provided a method for manufacturing a solid electrolytic capacitor comprising a porous sintered body of a valve metal, a dielectric layer covering at least part of the porous sintered body, and a solid electrolytic layer covering at least part of the dielectric layer. The manufacturing method comprises the steps of preparing a compacted powder body using powder of Nb, doping N into the compacted powder body by a gas phase process to change the powder of Nb forming the compacted powder body into powder of an Nb compound having a composition represented by NbxNz where z≤1.1 for x=1, and sintering the compacted powder body after the doping step.

Preferably, the step of obtaining powder of an Nb compound is so performed that the concentration of N in the powder of the Nb compound be not less than 8000 ppm.

Preferably, the step of obtaining powder of an Nb compound is so performed that the concentration of N in the powder of the Nb compound be not less than 14000 ppm.

Preferably, the step of obtaining powder of an Nb compound is so performed that the concentration of N in the powder of the Nb compound be not less than 24000 ppm.

Preferably, the step of obtaining powder of an Nb compound is so performed that the concentration of N in the powder of the Nb compound be not less than 48000 ppm.

Preferably, the step of obtaining powder of an Nb compound is so performed that concentration of N in the powder of the Nb compound be not less than 140000 ppm.

According to an eleventh aspect of the present invention, there is provided a method for manufacturing a solid electrolytic capacitor comprising a porous sintered body of a valve metal, a dielectric layer covering at least part of the porous sintered body, and a solid electrolytic layer covering at least part of the dielectric layer. The manufacturing method comprises the steps of preparing a compacted powder body using powder of Nb, doping O and N into the compacted powder body by a gas phase process to change the powder of Nb forming the compacted powder body into powder of an Nb compound having a composition represented by NbxOyNz where y+z≤1.1 for x=1, and sintering the compacted powder body after the doping step.

Preferably, the step of obtaining powder of an Nb compound is so performed that the total of the concentration of O and the concentration of N in the powder of the Nb compound be not less than 8000 ppm.

Preferably, the step of obtaining powder of an Nb compound is so performed that the total of the concentration of 0 and the concentration of N in the powder of the Nb compound be not less than 14000 ppm.

Preferably, the step of obtaining powder of an Nb compound is so performed that the total of the concentration of O and the concentration of N in the powder of the Nb compound be not less than 24000 ppm.

Preferably, the step of obtaining powder of an Nb compound is so performed that the total of the concentration of O and the concentration of N in the powder of the Nb compound be not less than 48000 ppm.

Preferably, the step of obtaining powder of an Nb compound is so performed that the total of the concentration of O and the concentration of N in the powder of the Nb compound be not less than 140000 ppm.

Preferably, as the powder of Nb, use is made of powder having a surface area per weight described in the preferred embodiments of the powder of an Nb compound according to the first through the third aspect of the present invention.

With this arrangement, a solid electrolytic capacitor including a porous sintered body suitable for enhancing the CV value is manufactured properly.

Preferably, the doping step is performed at a temperature lower than both of the temperature at which Nb₂O₅ forms on a surface of the compacted powder body and the temperature at which sintering of the compacted powder body occurs and at an oxygen concentration at which an oxide film of Nb₂O₅ does not form on the surface of the compacted powder body. With this arrangement, gas phase diffusion is performed properly.

Preferably, in the doping step, the concentration of doping gas and the ambient temperature are gradually increased.

Preferably, the manufacturing method further comprises the step of forming, on a surface of the compacted powder body, an oxide film made of an oxide of Nb having a composition represented by NbxOy where y<2.5 for x=1 by gas phase oxidation. The step is performed after the step of preparing the compacted powder body and before the doping step. In the doping step, O is thermally diffused from the oxide film into the powder of the compacted powder body at a temperature which is lower than the temperature at which sintering occurs. This arrangement is advantageous for controlling the concentration of O.

Preferably, in the oxide of Nb, y≤2.0 for x=1.

Preferably, in the oxide of Nb, y≤1.5 for x=1.

Preferably, in the oxide of Nb, y≤1.0 for x=1.

Preferably, the step of forming a compacted powder body is performed using paste containing the powder of Nb and a binder. With this arrangement, the powder of Nb contained in the paste agglomerate to become dense.

According to a twelfth aspect of the present invention, there is provided a method for manufacturing a solid electrolytic capacitor. The method comprises the step of forming a compacted powder body of Nb or an Nb compound. The step includes a process of bonding paste containing powder of Nb or an Nb compound and a binder to a rod made of a valve metal and a process of removing the binder.

With this arrangement, a compacted powder body of Nb or an Nb compound having a high density is provided. Generally, the bulk density of powder having a relatively small particle size is considerably increased by once soaking the powder with water and then drying the powder. In the process of removing the binder from the paste by e.g. heating, the minute particles of Nb or Nb compound agglomerate. As a result, a compacted powder body of Nb or Nb compound having a very high bulk density is obtained.

Preferably, the process of bonding the paste to the rod is performed by immersing the rod into the paste and then pulling the rod out of the paste. With this arrangement, a porous sintered body of a small size is manufactured properly.

Preferably, the rod is made of Nb. Such a rod is suitable for sintering with the powder of an Nb compound.

According to a thirteenth aspect of the present invention, there is provided a method for manufacturing a solid electrolytic capacitor. The method comprises the steps of forming a compacted powder body of an Nb compound, and bonding the compacted powder body to a rod made of a valve metal. In the bonding step, the compacted powder body is bonded to the rod by using paste containing Nb or an Nb compound.

Preferably, the compacted powder body is formed using powder of an Nb compound according to any one of the first through the third aspect of the present invention. The rod is made of Nb, and the paste contains a mixture of the powder of an Nb compound according to any one of the first through the third aspect of the present invention and powder of Nb. With this arrangement, the rod and the compacted powder body are strongly sintered together via the paste.

Preferably, the proportion of the powder of Nb in the mixture of the powder of the Nb compound and the powder of Nb is 0.1 to 50%. In this case, the rod and the porous sintered body are strongly bonded together.

Preferably, the manufacturing method further comprises the step of pressing part of a wire having a circular cross section in the radial direction to form the rod including a flat portion. The pressing step is performed before the bonding step. In the bonding step, the compacted powder body is bonded to the flat portion.

Preferably, the manufacturing method further comprises the step of bending the flat portion of the rod to form a stepped portion.

Other features and advantages of the present invention will become more apparent from the detailed description given below with reference to the accompanying drawings.

### BRIEF DESCRIPTION OF THE DRAWINGS

Fig. 1 is a graph showing the temperature history in an example of method for manufacturing an Nb compound according to the present invention.
Fig. 2 is a graph showing the temperature history in another example of method for manufacturing an Nb compound according to the present invention.
Fig. 3 is an overall perspective view showing an example of solid electrolytic capacitor according to the present invention.
Fig. 4 is a sectional view taken along lines IV-IV in Fig. 3.
Fig. 5 is a conceptual view showing part of Fig. 4 as enlarged.
Fig. 6 is an overall perspective view of a rod used for an example of method for manufacturing the solid electrolytic capacitor shown in Fig. 3.
Fig. 7 is an overall perspective view showing the step of press working the rod in the method for manufacturing the solid electrolytic capacitor shown in Fig. 3.
Fig. 8 is an overall perspective view showing the step of punching the rod in the method for manufacturing the solid electrolytic capacitor shown in Fig. 3.
Fig. 9 is an overall perspective view showing the step of bending the rod in the method for manufacturing the solid electrolytic capacitor shown in Fig. 3.
Fig. 10 is an overall perspective view showing the step of applying paste in the method for manufacturing the solid electrolytic capacitor shown in Fig. 3.
Fig. 11 is an overall perspective view showing the step of adhesion of a compacted powder body in the method for manufacturing the solid electrolytic capacitor shown in Fig. 3.
Fig. 12 is a sectional view taken along lines XII-XII in Fig. 11.
Fig. 13 is an enlarged view showing the principal portion of Fig. 12.
Fig. 14 is an overall perspective view showing the step of forming a solid electrolytic layer in the method for manufacturing the solid electrolytic capacitor shown in Fig. 3.
Fig. 15 is an overall perspective view showing the step of attaching a first anode lead and a cathode lead in the method for manufacturing the solid electrolytic capacitor shown in Fig. 3.
Fig. 16 is a sectional view showing another example of solid electrolytic capacitor according to the present invention.
Fig. 17 is a sectional view of a rod and paste used for an example of method for manufacturing the solid electrolytic capacitor shown in Fig. 16.
Fig. 18 is a sectional view showing the step of immersing the rod in the paste in the method for manufacturing the solid electrolytic capacitor shown in Fig. 16.
Fig. 19 is a sectional view showing the step of pulling the rod out of the paste in the method for manufacturing the solid electrolytic capacitor shown in Fig. 16.
Fig. 20 is an overall perspective view showing the rod and the paste adhering to the rod in the method for manufacturing the solid electrolytic capacitor shown in Fig. 16.
Fig. 21 is an overall perspective view showing the step of bending the rod in the method for manufacturing the solid electrolytic capacitor shown in Fig. 16.
Fig. 22 is an overall perspective view showing the porous sintered body and the first anode lead the paste in the method for manufacturing the solid electrolytic capacitor shown in Fig. 16.
Fig. 23 is a graph showing an example of temperature history in a diffusion furnace in the method for manufacturing the solid electrolytic capacitor shown in Fig. 16.
Fig. 24 is a graph showing another example of temperature history in a diffusion furnace in the method for manufacturing the solid electrolytic capacitor shown in Fig. 16.

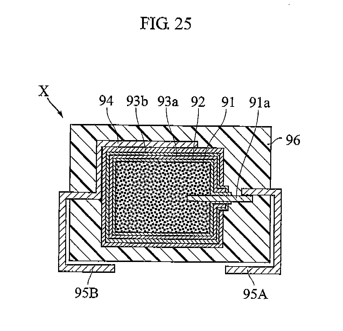

Fig. 25 is a sectional view showing an example of conventional solid electrolytic capacitor.

### BEST MODE FOR CARRYING OUT THE INVENTION

Preferred embodiments of the present invention will be described below. The table 1 below shows the composition and surface area per unit weight of powder of an Nb compound according to each of a first to a sixth examples of the present invention. As for the composition, the examples shown in the table include three kinds of compounds, i.e. a compound consisting of Nb and O, a compound consisting of Nb and N, and a compound consisting of Nb, O and N.

**Table 1**

| No. | Composition | Surface area per weight [m²/g] |
|---|---|---|
| Example 1 | NbO | 2 |
| Example 2 | NbO | 4 |
| Example 3 | NbN | 6 |
| Example 4 | NbN | 8 |
| Example 5 | Nb₁O_{0.6}N_{0.3} | 10 |
| Example 6 | Nb₁O_{0.6}N_{0.3} | 12 |

The Example 1 is powder of Nb compound containing Nb and O at the ratio of 1:1. The surface area per weight of this powder is 2m²/g. By using this powder of Nb compound as the material of a porous sintered body of a solid electrolytic capacitor, the CV value of the porous sintered body is enhanced. Specifically, to manufacture a porous sintered body, paste containing the powder of Nb compound and a binder is prepared. Then, by removing the binder by e.g. evaporation, a densely compacted powder body is obtained. Generally, the bulk density of powder having a relatively small particle size is considerably increased by once soaking the powder with water and then drying the powder. In the process of removing the binder from the paste by e.g. heating, the minute particles of Nb compound agglomerate. As a result, a compacted powder body of Nb compound having a very high bulk density is obtained. The surface area per weight of the powder of Nb compound of Example 1 is 2m²/g, which is relatively large. This is because the particle size of the powder is small. Thus, this Nb compound is suitable for forming a porous sintered body having a high density and increasing the CV value.

The powder of Nb compound of Example 1 is manufactured as follows. First, powder of Nb is prepared by pulverization or reduction using Na, Ca or Mg, for example. In Example 1, the powder of Nb is prepared to have the surface area per weight of about 2m²/g.

Then, the powder of Nb is doped with O. Specifically, with the powder of Nb isolated from the air, doping gas is added to the atmosphere at a predetermined concentration. As the doping gas, use is be made of gases capable of doping O, such as O₂, CO₂, CO, NO or NO₂. These gases may be diluted appropriately using Ar, for example.

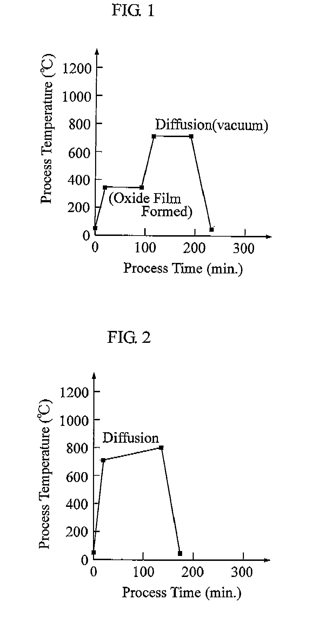

In Example 1, doping of O is performed by solid phase diffusion. Fig. 1 shows the temperature history in the doping process by solid phase diffusion. First, the powder of Nb is kept at 300 to 400 °C for about 80 minutes. As a result, an oxide film made of an oxide of Nb is formed on the surfaces of the powder of Nb. The oxide of Nb has a composition represented by NbxOy (x,y>0), where y<2.5 for x=1. Alternatively, y≤ 2.0 or y≤1.5. Further, in the case where the ratio of O in the intended Nb compound is smaller than 1 for the ratio 1 of Nb, y≤1.0. The oxide film is formed to have a thickness of about 1000 Å. Then, in a vacuum state after the doping gas is discharged, the powder of Nb is kept at about 700 °C for about 80 minutes. Thus, the O atoms contained in the oxide film diffuse into each particle of the powder of Nb, whereby powder of NbO, which is an Nb compound, is obtained.

All the processing temperatures in the above-described processes are sufficiently lower than the temperature at which sintering of Nb occurs. Therefore, there is no possibility that the powder of Nb is sintered in the doping process. When the doping of O is performed in the container used for vapor phase growth, the powder of Nb is easily isolated from the air. Unlike this, however, doping of O may be performed after the powder of Nb is moved from the container used for the vapor phase growth to e.g. a diffusion furnace. In this case, to prevent the powder of Nb from coming into contact with the air, it is preferable to move the powder of Nb to the diffusion furnace using an airtight container.

Conventionally, to achieve uniform doping into the interior of the powder of Nb, diffusion at a relatively high temperature for a relatively long time has been necessary. In Example 1, however, by employing the vapor phase growth, the particles of Nb have a cylindrical shape having a diameter of about 0.1 to 0.8 µm. Thus, the distance from the surface to the inside of the particle is relatively short. Since the diffusion time is proportional to the square of the distance, diffusion is completed in a shorter time than in a conventional technique. Thus, the manufacturing efficiency is enhanced. Further, homogenous NbO particles are obtained.

When the thickness of the oxide film is too large, the ratio of Nb to O may be 1:1.5, for example. In such a case, after the diffusion process, reduction process using hydrogen is performed. Due to the reduction by hydrogen, the ratio of O is so reduced that the ratio of Nb to O is 1:1.

The powder of NbO in Example 1 has a relatively large surface area per weight of 2m²/g. Thus, by using this powder of NbO for the solid electrolytic capacitor, which will be described later, the CV value is enhanced, so that a reduction in size and an increase in capacitance of the solid electrolytic capacitor are achieved.

To achieve a high CV value of the solid electrolytic capacitor which will be described later, it is preferable that, when the compound of Nb and O is represented by NbxOy, y≤1.1 for x=1 and the concentration of O is not less than 8000 ppm. The concentration of O may be not less than 14000 ppm, 24000 ppm, 48000 ppm or 140000 ppm.

Example 2 is also powder of Nb compound containing Nb and O at the ratio of 1:1. However, Example 2 differs from Example 1 in that the surface area per weight is 4m²/g. Further, in Example 2, doping of O is performed by gas phase diffusion.

To manufacture the powder of NbO of Example 2, powder of Nb is first prepared by vapor phase growth. In vapor phase growth, Nb is isolated from the air so that impurities other than Nb hardly mix in. Thus, powder of Nb having a high purity is produced. Further, vapor phase growth is suitable for producing powder of Nb having a considerably small particle size. With respect to the powder of Nb, doping is performed by gas phase diffusion, the temperature history in which is shown in Fig. 2. Specifically, the above-described doping gas of a predetermined concentration is mixed to the powder of Nb. Then, the processing temperature is linearly raised from e.g. 700 °C to 800 °C over about 120 minutes. In raising the temperature, the concentration of the doping gas is gradually increased. In this process, O atoms diffuse from the doping gas into each particle of the powder of Nb. After a predetermined treatment time, the concentration of O in each particle becomes generally uniform. In this way, power of NbO is obtained.

Both of Example 3 and Example 4 are powder of Nb compound containing Nb and N at the ratio of 1:1. The surface areas per weight in Example 3 and Example 4 are 6m²/g and 8m²/g, respectively. Similarly to Examples 1 and 2, the powder of NbN of these examples can be manufactured by preparing powder of Nb by vapor phase growth and then doping N into the powder by solid phase diffusion or gas phase diffusion. As the doping gas for doping N, NH₃ may be used. To dope N by solid phase diffusion, a film with a high N concentration is formed on the surfaces of the powder of Nb at about 700 °C, and then N atoms contained in the film are caused to diffuse into the powder at about 1000 °C.

To achieve a high CV value of the solid electrolytic capacitor which will be described later, it is preferable that, when the compound of Nb and N is represented by NbxNz (z>0), z≤1.1 for x=1 and the concentration of N is not less than 8000 ppm. The concentration of N may be not less than 14000 ppm, 24000 ppm, 48000 ppm or 140000 ppm.

Both of Example 5 and Example 6 are powder of Nb compound containing Nb, O and N at the ratio of 1:0.6:0.3. The surface areas per weight in Example 5 and Example 6 are 10m²/g and 12m²/g, respectively, which are larger than any other examples given in Table 1. The powder of Nb compound of Example 5 and Example 6 can be manufactured by preparing powder of Nb by vapor phase growth and then doping O and N into the powder.

As a method for doping O and N, gas phase diffusion may be employed. In this case, a gas which is capable of doping O and a gas which is capable of doping N may be used as the doping gas.

As another method for doping O and N, solid phase diffusion may be employed. In this case, as described with respect to Example 1, an oxide film made of an oxide of Nb is formed on the surfaces of the powder of Nb. The oxide of Nb has a composition represented by NbxOy, where y<2.5 for x=1. Alternatively, similarly to Example 1, the compositions in which y≤2.0, y≤1.5 or y≤1.0 may be employed. Then, in a non-oxidizing environment such as vacuum, O atoms are caused to diffuse into each particle of Nb, and then, doping of N is performed. In the Nb particles into which O atoms are diffused, i.e., the particles of a compound of Nb and O, diffusion of N atoms is promoted. In this way, powder of Nb compound consisting of Nb, O and N is obtained.

To achieve a high CV value of the solid electrolytic capacitor which will be described later, it is preferable that, when the compound of Nb, O and N is represented by NbxOyNz, y+z≤1. 1 for x=1 and the total of the concentration of O and the concentration of N is not less than 8000 ppm. The total of the concentration of O and the concentration of N may be not less than 14000 ppm, 24000 ppm, 48000 ppm or 140000 ppm.

With the above-described composition, the powder of Nb compound of each of Examples 1-6 has an electric conductivity which is not less than 1/10 of that of pure Nb.

An example of solid electrolytic capacitor using a porous sintered body made of the above-described powder of Nb compound will be described below.

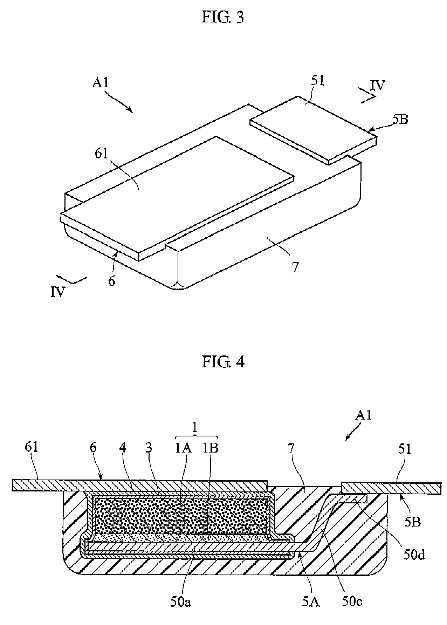

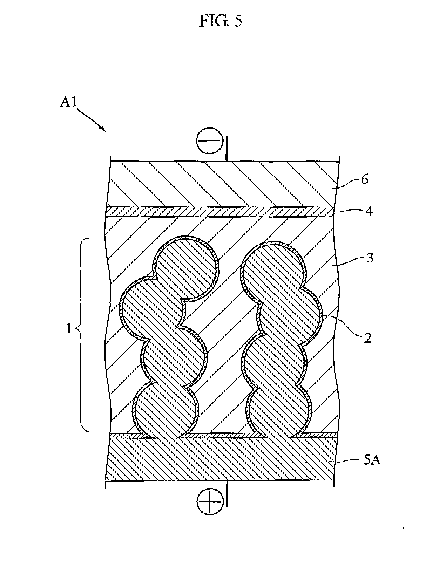

Figs. 3-5 show an example of solid electrolytic capacitor according to the present invention. The illustrated solid electrolytic capacitor A1 includes a porous sintered body 1, a dielectric layer 2, a solid electrolytic layer 3, a cathode conductor layer 4, a first anode lead 5A, a second anode lead 5B, a cathode lead 6 and a resin package 7. In Fig. 4, the illustration of the dielectric layer 2 is omitted. Fig. 5 is a schematic view showing the microstructure of the solid electrolytic capacitor A1. The solid electrolytic capacitor A1 is about 1.0 mm in length, 0.5 mm in width and 0.5 mm in thickness.

The porous sintered body 1 is in the form of a thin rectangular parallelepiped and includes a first porous sintered body 1A and a second porous sintered body 1B. The first porous sintered body 1A is made of powder of Nb compound. As the powder of Nb compound, the powder of the above-described Examples 1-5 can be employed. In this embodiment, the powder of NbO of Example 1 is employed. The second porous sintered body 1B intervenes between the first porous sintered body 1A and the first anode lead 5A. The second porous sintered body 1B is made of powder of NbO and powder of Nb. It is preferable that the ratio of the powder of Nb is 0.1 to 50 %. In this embodiment, the ratio of the powder of Nb is about 30 %.

The dielectric layer 2 is made of Nb₂O₅ and intervenes between the porous sintered body 1 and the solid electrolytic layer 3 to serve as a semiconductor. As shown in Fig. 5, the dielectric layer 2 covers part of the porous sintered body 1 and the first anode lead 5A. Although the illustration of the dielectric layer 2 is omitted in Fig. 4, the region extending from the porous sintered body 1 to a flat portion 50a and a stepped portion 50c of the first anode lead 5A is covered by the dielectric layer 2.

The solid electrolytic layer 3 is made of e.g. manganese dioxide and covers most part of the dielectric layer 2. As shown in Fig. 5, the solid electrolytic layer 3 fills minute gaps of the porous sintered body 1. As the material of the solid electrolytic layer 3, a conductive polymer such as polyethylenedioxythiophene or polypyrrole may be used instead of manganese dioxide.

The cathode conductor layer 4 intervenes between the solid electrolytic layer 3 and the cathode lead 6 and may comprise a laminate of a graphite layer and a silver paste layer. With this arrangement, the solid electrolytic layer 3 and the cathode lead 6 are electrically connected to each other.

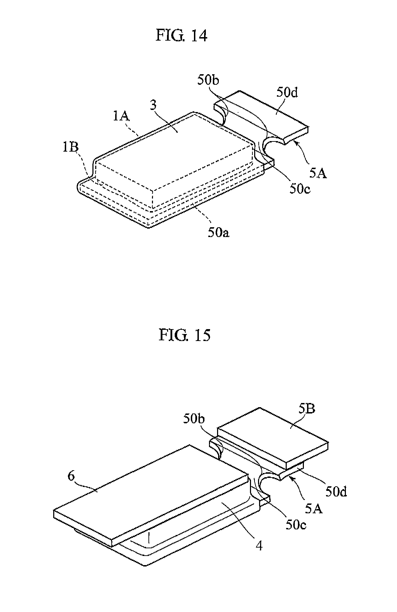

The first anode lead 5A is a plate-like member made of Nb and bonded to the porous sintered body 1. The first anode lead 5A includes two flat portions 50a, 50d and a stepped portion 50c positioned between the flat portions. As shown in Fig. 15 which is a figure for describing a method for manufacturing the solid electrolytic capacitor Al, two cutouts 50b are provided at the opposite sides of the stepped portion 50c. To the flat portion 50a, the second porous sintered body 1B is bonded. To the flat portion 50d, the second anode lead 5B is bonded. As shown in Fig. 4, the stepped portion 50c is provided to make the position of the second anode lead and the position of the cathode lead 6 in the vertical direction in the figure to generally correspond to each other.

The second anode lead 5B is a plate-like member made of Cu, for example. The second anode lead 5B is bonded to the flat portion 50d of the first anode lead 5A by e.g. laser bonding. Part of the second anode lead 5B projects from the resin package 7 to serve as an external anode terminal 51. The external anode terminal 51 is used for mounting the solid electrolytic capacitor A1 to a non-illustrated board, for example.

The cathode lead 6 is a plate-like member made of Cu, for example, and bonded to the solid electrolytic layer 3 via the cathode conductor layer 4. Part of the cathode lead 6 projects from the resin package 7 to serve as an external cathode terminal 61. The external cathode terminal 61 is used for mounting the solid electrolytic capacitor A1 to a non-illustrated board, for example. Owing to the provision of the stepped portion 50c, the position of the external anode terminal 51 in the vertical direction in Fig. 4 corresponds to that of the external cathode terminal 61. This structure ensures that the solid electrolytic capacitor A1 is properly mounted, with the upper surface in Fig. 4 utilized as the mount surface.

The,resin package 7 covers the porous sintered body 1, the dielectric layer 2, the solid electrolytic layer 3, the cathode conductor layer 4, the first anode lead 5A, and part of the second anode lead 5B and cathode lead 6 for protection. The resin package 7 may be made of an epoxy resin.

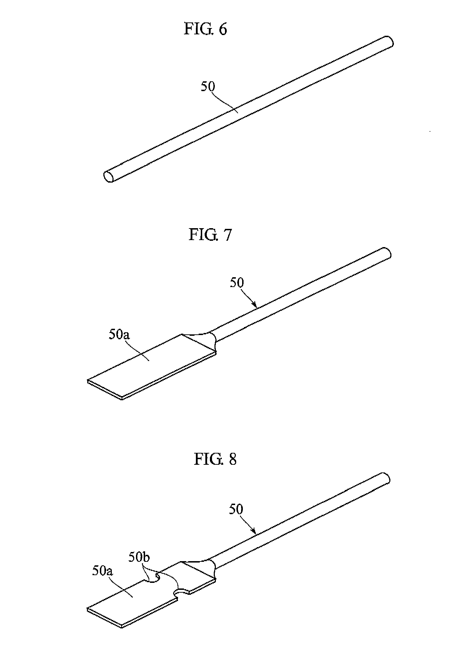

A method for manufacturing the solid electrolytic capacitor A1 will be described below with reference to Figs. 6-15.

First, as shown in Fig. 6, a rod 50 is prepared. The rod 50 is a wire made of Nb and having a diameter of about 150 µm.

Then, as shown in Fig. 7, a flat portion 50a is formed at an end of the rod 50. The flat portion 50a may be made by press-working the end of the rod 50. The flat portion 50a is formed to have a width of about 400 µm.

As shown in Fig. 8, two cutouts 50b are formed at the opposite sides of the flat portion 50a. The cutouts 50b may be formed by punching.

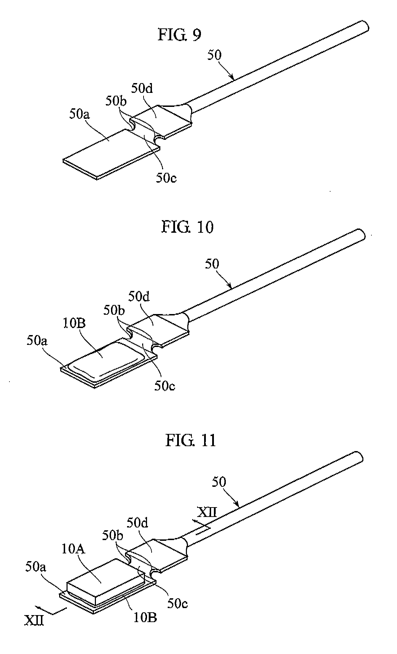

After the flat portion 50a and the two cutouts 50b are formed, a stepped portion 50c is formed, as shown in Fig. 9. Specifically, with the portions on the opposite sides of the two cutouts 50b supported, bending is performed so that these portions separate from each other in the thickness direction of the flat portion 50a. In this way, the stepped portion 50c and the flat portion 50d connected to the stepped portion 50c are formed.

Then, as shown in Fig. 10, paste 10B is applied to the flat portion 50a. The paste 10B is prepared by adding a mixture of NbO powder and Nb powder to a binder. It is preferable that the ratio of Nb powder in the mixture of NbO powder and Nb powder is 0.1 to 50 %. In this embodiment, the ratio of Nb powder is about 30 %.

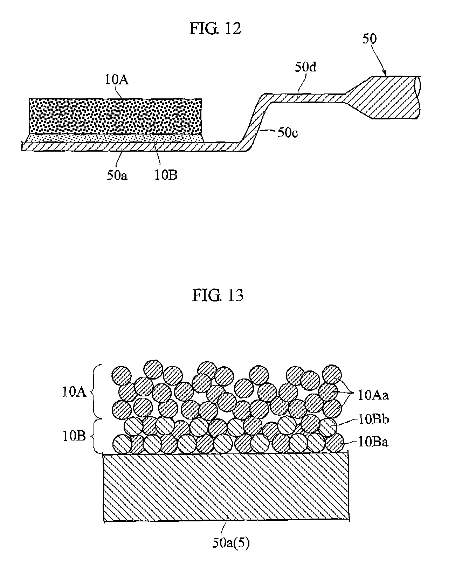

Then, as shown in Figs. 11 and 12, a compacted powder body 10A of NbO is bonded to the paste 10B applied to the flat portion 50a. The compacted powder body 10A of NbO is made of powder of NbO of Example 1 described above. The compacted powder body 10A is formed by preparing a paste by mixing the powder of NbO of Example 1 with a binder, dropping the paste into a rectangular mold and then removing the binder by evaporation, for example. Instead of this technique, the compacted powder body may be formed by pressing the powder of NbO of Example 1.

After the compacted powder body 10A is bonded, the rod 50, the compacted powder body 10A and the paste 10B are sintered integrally. While the compacted powder body 10A is made of powder having a relatively small particle size, the material thereof is NbO. Thus, the sintering temperature is higher than that of powder of Ta or Nb, for example. Therefore, sintering occurs at a relatively high temperature as compared with those made of powder of other materials. Fig. 13 shows part of the section shown in Fig. 12 as enlarged. The paste 10B is a mixture of powder 10Ba of NbO and powder 10Bb of Nb. Of these, the powder 10Ba of NbO is likely to sinter with the powder 10Aa of NbO forming the compacted powder body 10A bonded on the paste 10B. On the other hand, the powder 10Bb of Nb is likely to sinter with the first anode lead 5 which is also made of Nb. Thus, the compacted powder body 10A and the first anode lead 5 are sintered to each other via the paste 10B with a relatively high bonding strength. By this sintering process, the first porous sintered body 1A and the second porous sintered body 1B shown in Fig. 14 are obtained.

After the sintering is finished, the rod 50 is cut at a position closer to the end so that the unnecessary portion is removed. Then, as shown in Fig. 14, a dielectric layer 2 and a solid electrolytic layer 3 are formed. Since the dielectric layer 2 is a minute layer, the illustration thereof is omitted in this figure. The dielectric layer 2 may be formed by performing chemical conversion treatment with the porous sintered body 1, the flat portion 50a and the stepped portion 50c immersed in an aqueous solution of phosphoric acid. Then, the porous sintered body 1 and the flat portion 50a are caused to undergo chemical polymerization or electrolytic polymerization using a treatment liquid containing ethylenedioxythiophene or pyrrole, whereby a solid electrolytic layer 3 is formed. When a solution of manganese nitrate is used, a solid electrolytic layer 3 made of manganese dioxide is formed.

After the dielectric layer 2 and the solid electrolytic layer 3 are formed, a second anode lead 5B and a cathode lead 6 are attached, as shown in Fig. 15. The second anode lead 5B is attached to the flat portion 50d by laser bonding. Specifically, with the second anode lead 5B fixed on the flat portion 50d, a laser beam is directed to the upper surface of the second anode lead 5B from the upper side in the figure. By the local application of the laser energy, part of the second anode lead 5B and part of the flat portion 50d fuse to each other. The portion formed with the two cutouts 50b is smaller in width than other portions. Thus, the heat generated by the laser bonding is prevented from being conducted to the solid electrolytic layer 3 and so on. The cathode lead 6 is bonded to the solid electrolytic layer 3 via a cathode conductor layer 4. The cathode conductor layer 4 may comprise a laminate of a graphite layer and a silver paste layer.

Then, a resin package 7 is formed by resin molding using an epoxy resin. Thus, the solid electrolytic capacitor A1 shown in Figs. 3 and 4 is obtained.

The advantages of the solid electrolytic capacitor A1 will be described below.

According to this embodiment, the CV value of the solid electrolytic capacitor A1 is enhanced. Specifically, by using the powder of NbO of Example 1 as the material of the porous sintered body 1, the surface area per weight of the porous sintered body 1 is increased. When the powder of NbO having the surface area per weight of 2m²/g is used, the CV value of the solid electrolytic capacitor A1 is 100000 µFV/g on the condition that the formation voltage is 10V. This CV value is considerably higher than that of a conventional solid electrolytic capacitor. In this way, the CV value of the solid electrolytic capacitor A1 is enhanced, and a high capacitance is achieved. When the powder of Nb compound of each of Examples 2-5 is used as the material of the porous sintered body 1, the CV value of the solid electrolytic capacitor A1 is 200000 µFV/g (Example 2), 300000 µFV/g (Example 3), 400000 µFV/g (Example 4), 500000 µFV/g (Example 5) or 600000 µFV/g (Example 6). It is to be noted that CV values largely depend on the measurement conditions, the particle configuration, the sintering conditions, and the structure of the electrode. The above-described CV values are the measurement results obtained under the condition of this embodiment and may vary depending on the structure of a solid electrolytic capacitor including an electrode and so on. While achieving a high CV value, the powder of NbO of Example 1 has an electric conductivity which is not less than 1/10 of that of Nb, and is not an insulator or a semiconductor but belongs to a good conductor. Thus, the ESR of the solid electrolytic capacitor A1 is reduced.

By achieving a high CV value, the solid electrolytic capacitor A1 can be reduced in size. Particularly, according to this embodiment, a very small solid electrolytic capacitor A1 which is about 1.0 mm by 0.5 mm is provided owing to the techniques such as the formation of a compacted powder body 10A using paste and the use of a rod 50 including a flat portion 50a.

Further, since the powder of NbO is an Nb compound, rapid oxidation reaction is unlikely to occur even when the temperature becomes relatively high in the air. Therefore, the manufacturing process is facilitated.

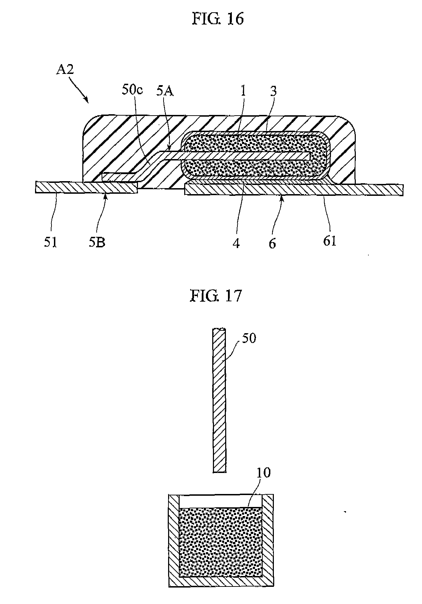

Figs. 16-24 show another embodiment of solid electrolytic capacitor according to the present invention, and an example of method for forming the solid electrolytic capacitor. In these figures, the elements which are identical or similar to those of the foregoing embodiment are designated by the same reference signs as those used for the foregoing embodiment.

The solid electrolytic capacitor A2 shown in Fig. 16 differs from the solid electrolytic capacitor A1 of the foregoing embodiment in that the first anode lead 5A is partially embedded in the porous sintered body 1.

The porous sintered body 1 is made of an Nb compound and may be made of a compound of Nb and O, a compound of Nb and N or a compound of Nb, O and N, like the Examples 1-5. The porous sintered body 1 is generally columnar.

The first anode lead 5A comprises a wire made of Nb and having a diameter of about 100 to 500 µm and is partially embedded in the porous sintered body 1. The first anode lead 5A is formed with a stepped portion 50c.

A method for manufacturing the solid electrolytic capacitor A2 will be described below with reference to Figs. 17-24.

First, as shown in Fig. 17, a rod 50 and paste 10 are prepared. The rod 50 is a wire made of Nb and having a diameter of about 500 µm. The paste 10 is prepared by mixing Nb powder with a binder. The powder of Nb may be formed by vapor phase growth.

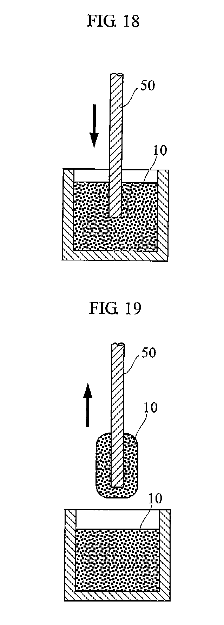

Then, as shown in Fig. 18, the rod 50 is moved downward in the figure so that the portion close to the lower end is immersed in the paste 10.

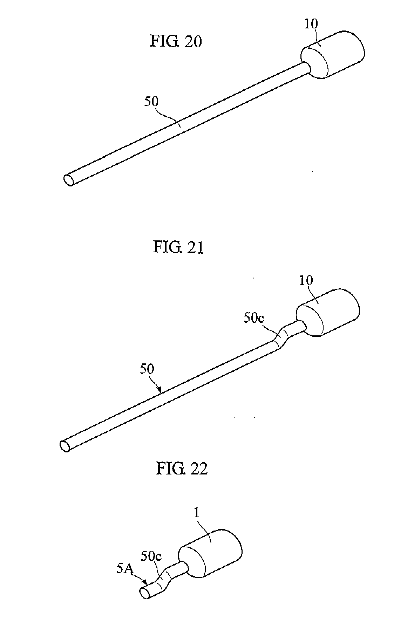

After the lapse of a predetermined time from the immersion of the rod 50 into the paste 10, the rod 50 is pulled out of the paste 10, as shown in Fig. 19. By this process, as shown in Fig. 20, the paste 10 adheres to the end of the rod 50 like a cylinder.

After the paste 10 is dried so as not to drop, the rod 50 is subjected to bending, as shown in Fig. 21, whereby the stepped portion 50c is formed.

Then, the removal of the binder from the paste 10, doping and sintering are performed. The doping may be performed by solid phase diffusion or gas phase diffusion. In the solid phase diffusion, an oxide film having a high concentration of O is formed on the surface of the target metal. For instance, a film of Nb₂O₅ which has a higher concentration of O than NbO is formed. The O atoms in the oxide film are caused to diffuse into the other portions of the target metal. In the gas phase diffusion, diffusion is caused at a temperature at which a relatively high diffusion speed is achieved and in a gas with a relatively low concentration of O, for example. Generally, the solid phase diffusion in which an oxide film with a high concentration of O is formed is easier. On the other hand, although the condition control in the gas phase diffusion is difficult, the gas phase diffusion achieves high quality such as uniform diffusion.

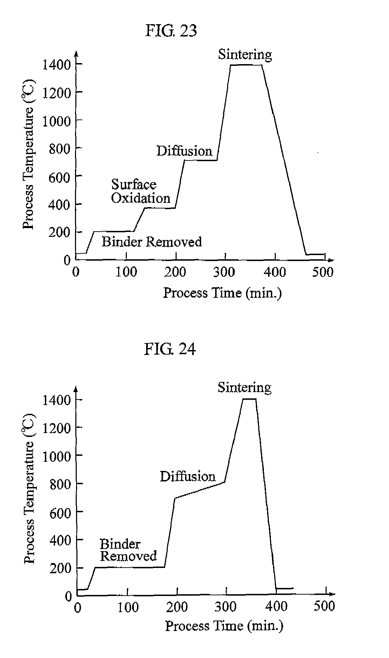

Fig. 23 shows the temperature history in the solid phase diffusion. First, the integral product of the rod 50 and the paste 10 is placed in e.g. a diffusion furnace. The product is kept at about 200 °C in a vacuum for about 100 minutes. As a result, the binder is removed from the paste 10. Then, doping gas is added to the atmosphere at a predetermined concentration. As the doping gas, use is be made of gases capable of doping O, such as O₂, CO₂, CO, NO or NO₂. The doping gas may be diluted with an inert gas such as He, Ne or Ar. In this state, the temperature in the furnace is kept at 300 to 400 °C for about 80 minutes. As a result, an oxide film of Nb₂O₅ is formed on the surfaces of the powder of Nb contained in the paste 10. The oxide film is formed to have a thickness of about 1000 Å. Then, in a vacuum state after the doping gas is discharged, the temperature in the furnace is kept at about 700 °C for about 80 minutes. As a result, the O atoms contained in the oxide film diffuse into each particle of the powder of Nb, whereby powder of NbO, which is an Nb compound, is obtained. Thus, the doping of O is completed, and a compacted powder body made of NbO is obtained. Then, the temperature in the furnace is kept at about 1400 °C for 80 minutes. This sintering temperature is considerably higher than the sintering temperature of the powder of pure Nb. This is because, NbO which is a compound of Nb is provided by the doping. It is to be noted that the sintering temperature may be set appropriately to 1150 to 1600 °C depending on e.g. the shape of the powder of Nb. In this way, the compacted powder body made of NbO and the rod 50 are sintered. Since the sintering is performed at a considerably high temperature of about 1400 °C, the compacted powder body and the rod 50 are strongly bonded to each other.

Fig. 24 shows the temperature history in the gas phase diffusion. As will be understood from the figure, in the gas phase diffusion, after the binder is removed, the temperature in the furnace is linearly raised from 700 °C to 800 °C over about 100 minutes. The doping gas such as O₂, CO₂, CO, NO or NO₂ is loaded, in advance, to the atmosphere at a predetermined concentration. In raising the temperature in the furnace, the concentration of the doping gas is gradually increased. As a result, O atoms diffuse into each particle of Nb contained in the paste 10. Thus, the doping of O is performed. Then, sintering is performed as described above with reference to Fig. 23.

After the doping by solid phase diffusion or gas phase diffusion and sintering are completed, the rod 50 is cut at a position closer to the end. Thus, as shown in Fig. 22, a porous sintered body 1 made of NbO in which the first anode lead 5A is partially embedded is obtained. By subsequently performing known process steps, the solid electrolytic capacitor A2 shown in Fig. 16 is obtained.

According to this embodiment again, a reduction in size and an increase in capacitance of the solid electrolytic capacitor A2 are achieved. Particularly, owing to the technique to cause the paste 10 to adhere to the end of the rod 50, a very small porous sintered body 1 is obtained. In the solid electrolytic capacitor A2 of this embodiment, the porous sintered body 1 has a diameter of about 1 mm.

Since the powder of Nb contained in the paste 10 is formed by vapor phase growth, the powder is very minute. In removing the binder from the paste 10, the particles of Nb agglomerate to increase the bulk density. Thus, the porous sintered body 1 becomes dense. A denser porous sintered body 1 provides a higher CV value. In this point again, the solid electrolytic capacitor A2 is suitable for increasing the capacitance.

The powder of Nb compound, porous sintered body and solid electrolytic capacitor according to the present invention are not limited to the foregoing embodiments. The specific structure of each part of the solid electrolytic capacitor according to the present invention may be modified in design in various ways. The method for manufacturing the powder of Nb compound, porous sintered body and solid electrolytic capacitor according to the present invention may also be modified in various ways.

As the method for preparing the powder of Nb, vapor phase growth is very effective in reducing the particle size. However, the present invention is not limited thereto, and pulverization or reduction using Na, Ca or Mg, for example, may be employed.

The above-described structure of the solid electrolytic capacitor is merely an example of solid electrolytic capacitor according to the present invention and is not limitative. The powder of Nb compound according to the present invention can be used for solid electrolytic capacitors of various structures including the conventional one shown in Fig. 15, and these solid electrolytic capacitors are also included in the present invention. For instance, by increasing the size of the above-described solid electrolytic capacitor, a solid electrolytic capacitor with a high capacitance, which has not been achieved by prior art, is obtained.

## Claims

1. Powder of an Nb compound having a composition represented by NbxOy and having an electric conductivity not less than 1/10 of electric conductivity of Nb.

2. The powder of an Nb compound according to claim 1, wherein y≤1.1 for x=1 in the composition.

3. The powder of an Nb compound according to claim 2, wherein concentration of O is not less than 8000 ppm.

4. The powder of an Nb compound according to claim 2, wherein concentration of O is not less than 14000 ppm.

5. The powder of an Nb compound according to claim 2, wherein concentration of O is not less than 24000 ppm.

6. The powder of an Nb compound according to claim 2, wherein concentration of O is not less than 48000 ppm.

7. The powder of an Nb compound according to claim 2, wherein concentration of O is not less than 140000 ppm.

8. Powder of an Nb compound having a composition represented by NbxNz and having an electric conductivity which is not less than 1/10 of electric conductivity of Nb.

9. The powder of an Nb compound according to claim 8, wherein z≤1.1 for x=1 in the composition.

10. The powder of an Nb compound according to claim 9, wherein concentration of N is not less than 8000 ppm.

11. The powder of an Nb compound according to claim 9, wherein concentration of N is not less than 14000 ppm.

12. The powder of an Nb compound according to claim 9, wherein concentration of N is not less than 24000 ppm.

13. The powder of an Nb compound according to claim 9, wherein concentration of N is not less than 48000 ppm.

14. The powder of an Nb compound according to claim 9, wherein concentration of N is not less than 140000 ppm.

15. Powder of an Nb compound having a composition represented by NbxOyNz and an electric conductivity which is not less than 1/10 of electric conductivity of Nb.

16. The powder of an Nb compound according to claim 15, wherein y+z≤1.1 for x=1 in the composition.

17. The powder of an Nb compound according to claim 16, wherein total of concentration of O and concentration of N is not less than 8000 ppm.

18. The powder of an Nb compound according to claim 16, wherein total of concentration of 0 and concentration of N is not less than 14000 ppm.

19. The powder of an Nb compound according to claim 16, wherein total of concentration of O and concentration of N is not less than 24000 ppm.

20. The powder of an Nb compound according to claim 16, wherein total of concentration of O and concentration of N is not less than 48000 ppm.

21. The powder of an Nb compound according to claim 16, wherein total of concentration of O and concentration of N is not less than 140000 ppm.

22. The powder of an Nb compound according to any one of claims 1 through 21, wherein the powder has a surface area per unit weight of not less than 2m²/g.

23. The powder of an Nb compound according to any one of claims 1 through 21, wherein the powder has a surface area per unit weight of not less than 4m²/g.

24. The powder of an Nb compound according to any one of claims 1 through 21, wherein the powder has a surface area per unit weight of not less than 8m²/g.

25. The powder of an Nb compound according to any one of claims 1 through 21, wherein the powder has a surface area per unit weight of not less than 10m²/g.

26. A method for manufacturing powder of an Nb compound, the method comprising the steps of:
preparing powder of Nb; and
doping O into the powder of Nb;
wherein the doping of 0 is performed by a gas phase process to obtain powder of an Nb compound having a composition represented by NbxOy where y≤1.1 for x=1.

27. The manufacturing method according to claim 26, wherein the O doping step is so performed that concentration of O in the powder of an Nb compound be not less than 8000 ppm.

28. The manufacturing method according to claim 26, wherein the O doping step is so performed that concentration of O in the powder of the Nb compound be not less than 14000 ppm.

29. The manufacturing method according to claim 26, wherein the O doping step is so performed that concentration of O in the powder of the Nb compound be not less than 24000 ppm.

30. The manufacturing method according to claim 26, wherein the O doping step is so performed that concentration of O in the powder of the Nb compound be not less than 48000 ppm.

31. The manufacturing method according to claim 26, wherein the O doping step is so performed that concentration of O in the powder of the Nb compound be not less than 140000 ppm.

32. A method for manufacturing powder of an Nb compound, the method comprising the steps of:
preparing powder of Nb; and
doping N into the powder of Nb;
wherein the doping of N is performed by a gas phase process to obtain powder of an Nb compound having a composition represented by NbxNz where z≤1.1 for x=1.

33. The manufacturing method according to claim 32, wherein the N doping step is so performed that concentration of N in the powder of the Nb compound be not less than 8000 ppm.

34. The manufacturing method according to claim 32, wherein the N doping step is so performed that concentration of N in the powder of the Nb compound be not less than 14000 ppm.

35. The manufacturing method according to claim 32, wherein the N doping step is so performed that concentration of N in the powder of the Nb compound be not less than 24000 ppm.

36. The manufacturing method according to claim 32, wherein the N doping step is so performed that concentration of N in the powder of the Nb compound be not less than 48000 ppm.

37. The manufacturing method according to claim 32, wherein the N doping step is so performed that concentration of N in the powder of the Nb compound be not less than 140000 ppm.

38. A method for manufacturing powder of an Nb compound, the method comprising the steps of:
preparing powder of Nb; and
doping O and N into the powder of Nb;
wherein the doping of O and N is performed by a gas phase process to obtain powder of an Nb compound having a composition represented by NbxOyNz where y+z≤1.1 for x=1.

39. The manufacturing method according to claim 38, wherein the step of doping O and N is so performed that total of concentration of O and concentration of N in the powder of the Nb compound be not less than 8000 ppm.

40. The manufacturing method according to claim 38, wherein the step of doping O and N is so performed that total of concentration of O and concentration of N in the powder of the Nb compound be not less than 14000 ppm.

41. The manufacturing method according to claim 38, wherein the step of doping O and N is so performed that total of concentration of O and concentration of N in the powder of the Nb compound be not less than 24000 ppm.

42. The manufacturing method according to claim 38, wherein the step of doping O and N is so performed that total of concentration of O and concentration of N in the powder of the Nb compound be not less than 48000 ppm.

43. The manufacturing method according to claim 38, wherein the step of doping O and N is so performed that total of concentration of O and concentration of N in the powder of the Nb compound be not less than 140000 ppm.

44. The manufacturing method according to any one of claims 26 through 43, wherein the step of preparing powder of Nb is so performed that surface area per unit weight of the powder lies in any one of the ranges of not less than 2m²/g. not less than 4m²/g, not less than 8m²/g and not less than 10m²/g.

45. The manufacturing method according to any one of claims 26 through 43, wherein the doping step is performed at a temperature lower than both of a temperature at which Nb₂O₅ forms on a surface of the powder of Nb and a temperature at which sintering of the powder of Nb occurs and at an oxygen concentration at which an oxide film of Nb₂O₅ does not form on the surface of the powder of Nb.

46. The manufacturing method according to claim 45, wherein, in the doping step, concentration of doping gas and ambient temperature are gradually increased.

47. The manufacturing method according to any one of claims 26 through 43, further comprising the step of forming, on a surface of the powder of Nb, an oxide film made of an oxide of Nb having a composition represented by NbxOy where y<2.5 for x=1 by gas phase oxidation, the step being performed after the step of preparing powder of Nb and before the doping step;
wherein, in the doping step, O is thermally diffused from the oxide film into the powder at a temperature at which sintering does not occur.

48. The method for manufacturing powder of an Nb compound according to claim 47, wherein, in the oxide of Nb, y≤2.0 for x=1.

49. The method for manufacturing powder of an Nb compound according to claim 47, wherein, in the oxide of Nb, y≤1.5 for x=1.

50. The method for manufacturing powder of an Nb compound according to claim 47, wherein, in the oxide of Nb, y≦1.0 for x=1.

51. The manufacturing method according to any one of claims 26 through 43, wherein the step of preparing powder of Nb is performed by vapor phase growth.

52. The manufacturing method according to any one of claims 26 through 43, wherein the powder of Nb is isolated from air from the start of the step of preparing the powder of Nb till the completion of the doping step.

53. The manufacturing method according to any one of claims 26 through 43, further comprising a reduction step using hydrogen for adjusting the composition of the compound of Nb, the reduction step being performed after the doping step.

54. A porous sintered body for manufacturing a solid electrolytic capacitor, the porous sintered body comprising the powder of an Nb compound as set forth in any one of claims 1 through 25.

55. A solid electrolytic capacitor comprising:
the porous sintered body as set forth in claim 54;
a dielectric layer covering at least part of the porous sintered body; and
a solid electrolytic layer covering at least part of the dielectric layer.

56. The solid electrolytic capacitor according to claim 55, wherein the solid electrolytic capacitor has a CV value of not less than 100000 µF/g.

57. The solid electrolytic capacitor according to claim 55, wherein the solid electrolytic capacitor has a CV value of not less than 200000 µF/g.

58. The solid electrolytic capacitor according to claim 55, wherein the solid electrolytic capacitor has a CV value of not less than 300000 µF/g.

59. The solid electrolytic capacitor according to claim 55, wherein the solid electrolytic capacitor has a CV value of not less than 400000 µF/g.

60. The solid electrolytic capacitor according to claim 55, wherein the solid electrolytic capacitor has a CV value of not less than 500000 µF/g.

61. The solid electrolytic capacitor according to claim 55, wherein the solid electrolytic capacitor has a CV value of not less than 700000 µF/g.

62. The solid electrolytic capacitor according to claim 55, wherein the solid electrolytic capacitor has a CV value of not less than 800000 µF/g.

63. The solid electrolytic capacitor according to claim 55, wherein the solid electrolytic capacitor has a CV value of not less than 1000000 µF/g.

64. A method for manufacturing a solid electrolytic capacitor comprising:
a porous sintered body of a valve metal;
a dielectric layer covering at least part of the porous sintered body; and
a solid electrolytic layer covering at least part of the dielectric layer;
the method comprising the steps of:
preparing a compacted powder body using powder of Nb;
doping O into the compacted powder body by a gas phase process to change the powder of Nb forming the compacted powder body into powder of an Nb compound having a composition represented by NbxOy where y≤1.1 for x=1; and
sintering the compacted powder body after the doping step.

65. The manufacturing method according to claim 64, wherein the step of obtaining powder of an Nb compound is so performed that concentration of O in the powder of the Nb compound be not less than 8000 ppm.

66. The manufacturing method according to claim 64, wherein the step of obtaining powder of an Nb compound is so performed that concentration of O in the powder of the Nb compound be not less than 14000 ppm.

67. The manufacturing method according to claim 64, wherein the step of obtaining powder of an Nb compound is so performed that concentration of O in the powder of the Nb compound be not less than 24000 ppm.

68. The manufacturing method according to claim 64, wherein the step of obtaining powder of an Nb compound is so performed that concentration of O in the powder of the Nb compound be not less than 48000 ppm.

69. The manufacturing method according to claim 64, wherein the step of obtaining powder of an Nb compound is so performed that concentration of O in the powder of the Nb compound be not less than 140000 ppm.

70. A method for manufacturing a solid electrolytic capacitor comprising:
a porous sintered body of a valve metal;
a dielectric layer covering at least part of the porous sintered body; and
a solid electrolytic layer covering at least part of the dielectric layer;
the method comprising the steps of:
preparing a compacted powder body using powder of Nb;
doping N into the compacted powder body by a gas phase process to change the powder of Nb forming the compacted powder body into powder of an Nb compound having a composition represented by NbxNz where z≤1.1 for x=1; and
sintering the compacted powder body after the doping step.

71. The manufacturing method according to claim 70, wherein the step of obtaining powder of an Nb compound is so performed that concentration of N in the powder of the Nb compound be not less than 8000 ppm.

72. The manufacturing method according to claim 70, wherein the step of obtaining powder of an Nb compound is so performed that concentration of N in the powder of the Nb compound be not less than 14000 ppm.

73. The manufacturing method according to claim 70, wherein the step of obtaining powder of an Nb compound is so performed that concentration of N in the powder of the Nb compound be not less than 24000 ppm.

74. The manufacturing method according to claim 70, wherein the step of obtaining powder of an Nb compound is so performed that concentration of N in the powder of the Nb compound be not less than 48000 ppm.

75. The manufacturing method according to claim 70, wherein the step of obtaining powder of an Nb compound is so performed that concentration of N in the powder of the Nb compound be not less than 140000 ppm.

76. A method for manufacturing a solid electrolytic capacitor comprising:
a porous sintered body of a valve metal;
a dielectric layer covering at least part of the porous sintered body; and
a solid electrolytic layer covering at least part of the dielectric layer;
the method comprising the steps of:
preparing a compacted powder body using powder of Nb;
doping O and N into the compacted powder body by a gas phase process to change the powder of Nb forming the compacted powder body into powder of an Nb compound having a composition represented by NbxOyNz where y+z≤1.1 for x=1; and
sintering the compacted powder body after the doping step.

77. The manufacturing method according to claim 7 6, wherein the step of obtaining powder of an Nb compound is so performed that total of concentration of O and concentration of N in the powder of the Nb compound be not less than 8000 ppm.

78. The manufacturing method according to claim 76, wherein the step of obtaining powder of an Nb compound is so performed that total of concentration of O and concentration of N in the powder of the Nb compound be not less than 14000 ppm.

79. The manufacturing method according to claim 7 6, wherein the step of obtaining powder of an Nb compound is so performed that total of concentration of O and concentration of N in the powder of the Nb compound be not less than 24000 ppm.

80. The manufacturing method according to claim 76, wherein the step of obtaining powder of an Nb compound is so performed that total of concentration of O and concentration of N in the powder of the Nb compound be not less than 48000 ppm.

81. The manufacturing method according to claim 76, wherein the step of obtaining powder of an Nb compound is so performed that total of concentration of O and concentration of N in the powder of the Nb compound be not less than 140000 ppm.

82. The manufacturing method according to any one of claims 64 through 81, wherein surface area per unit weight of the powder of Nb lies in any one of the ranges of not less than 2m²/g, not less than 4m²/g, not less than 8m²/g and not less than 10m²/g.

83. The manufacturing method according to any one of claims 64 through 81, wherein the doping step is performed at a temperature lower than both of a temperature at which Nb₂O₅ forms on a surface of the compacted powder body and a temperature at which sintering of the compacted powder body occurs and at an oxygen concentration at which an oxide film of Nb₂O₅ does not form on the surface of the compacted powder body.

84. The method for manufacturing an Nb compound according to claim 83, wherein, in the doping step, concentration of doping gas and ambient temperature are gradually increased.

85. The manufacturing method according to any one of claims 64 through 81, further comprising the step of forming, on a surface of the compacted powder body, an oxide film made of an oxide of Nb having a composition represented by NbxOy where y<2.5 for x=1 by gas phase oxidation, the step being performed after the step of preparing the compacted powder body and before the doping step;
wherein, in the doping step, O is thermally diffused from the oxide film into the powder of the compacted powder body at a temperature which is lower than a temperature at which sintering occurs.

86. The manufacturing according to claim 85, wherein, in the oxide of Nb, y≤2.0 for x=1.

87. The manufacturing according to claim 85, wherein, in the oxide of Nb, y≤1.5 for x=1.

88. The manufacturing according to claim 85, wherein, in the oxide of Nb, y≤1.0 for x=1.

89. The manufacturing method according to any one of claims 64 through 81, wherein the step of forming a compacted powder body is performed using paste containing the powder of Nb and a binder.

90. A method for manufacturing a solid electrolytic capacitor, the method comprising the step of forming a compacted powder body of either one of Nb and an Nb compound, the step including a process of bonding paste containing powder of Nb or an Nb compound and a binder to a rod made of a valve metal and a process of removing the binder.

91. The manufacturing method according to claim 90, wherein the process of bonding the paste to the rod is performed by immersing the rod into the paste and then pulling the rod out of the paste.

92. The manufacturing method according to claim 90, wherein the rod is made of Nb.

93. A method for manufacturing a solid electrolytic capacitor, the method comprising the steps of:
forming a compacted powder body of an Nb compound; and
bonding the compacted powder body to a rod made of a valve metal;
wherein, in the bonding step, the compacted powder body is bonded to the rod by using paste containing at least either of Nb and an Nb compound.

94. The manufacturing method according to claim 93, wherein the compacted powder body is made of powder of the Nb compound as set forth in any of claims 1 through 25, wherein the rod is made of Nb, and wherein the paste contains mixture of powder of the Nb compound as set forth in any one of claims 1 through 25 and powder of Nb.

95. The manufacturing method according to claim 94, wherein the proportion of the powder of Nb in the mixture of the powder of the Nb compound and the powder of Nb is 0.1 to 50%.

96. The method for manufacturing a solid electrolytic capacitor according to any one of claims 93 through 95, further comprising the step of pressing part of a wire having a circular cross section in a radial direction thereof to form the rod including a flat portion, the pressing step being performed before the bonding step;
wherein, in the bonding step, the compacted powder body is bonded to the flat portion.

97. The method for manufacturing a solid electrolytic capacitor according to claim 96, further comprising the step of bending the flat portion of the rod to form a stepped portion.
